# EUROPÄISCHE PATENTANMELDUNG

(11) **EP 1 321 879 A2**
(43) Veröffentlichungstag der Anmeldung: **25.06.2003**
(21) Anmeldenummer: 02102841.0
(22) Anmeldetag: 19.12.2002
(51) Int. Cl.: G06F 17/60, G07F 19/00

(54) **Multimediaplattform und Verfahren für den Online-Handel**

(30) Priorität: 21.12.2001 DE 10163298
(71) Anmelder: Dilmaghani, Malek Eskandar, 27607 Langen (DE)
(72) Erfinder: Dilmaghani, Malek Eskandar, 27607 Langen (DE)
(74) Vertreter: von Ahsen, Erwin-Detlef, Dipl.-Ing.

(57) **Zusammenfassung**

Bei bekannten Multimediaplattformen und Verfahren für den Online-Handel ist es nachteilig, daß der Handel ausschließlich auf Kreditbasis beruht. Für den Lieferanten hat dies den Nachteil, daß er seine Waren und/oder Dienstleistungen in Vorleistung bereitstellt, ohne zu wissen, ob er seine Bezahlung erhält. Für den Kunden ist es nachteilig, daß er ein erhebliches Risiko eingeht, wenn Dritte unberechtigt beispielsweise die zur Bezahlung angegebenen Kreditkartendaten abhören. Außerdem können nicht kreditwürdige Kunden, die beispielsweise keine Kreditkarte besitzen, nicht am Online-Handel teilnehmen. Aus diesem Grund wird eine Multimediaplattform angegeben, bei der eine Endgeräteanordnung (12) eines Kunden mittels einer zweiten Rückverbindung (18) mit einer Verrechnungseinheit (19) zum Durchführen einer Finanztransaktion in Verbindung steht. Außerdem wird ein Verfahren angegeben, bei dem die Abrechnungsdaten von der Endgeräteanordnung (12) über die zweite Rückverbindung (18) an die Verrechnungseinheit (19) übertragen werden.

## Beschreibung

Die Erfindung betrifft eine Multimediaplattform für den Online-Handel von Waren und/oder Dienstleistungen, mit einem virtuellen Einkaufszentrum, von dem Waren und/oder Dienstleistungen abrufbar sind, mit einer Endgeräteanordnung, die eine Wiedergabeeinheit und Eingabemittel aufweist, mit einer breitbandigen Lieferverbindung zwischen dem virtuellen Einkaufszentrum und der Endgeräteanordnung, und mit einer ersten Rückverbindung von der Endgeräteanordnung zu dem virtuellen Einkaufszentrum zum Erteilen eines Auftrags, wobei eine Verrechnungseinheit mit dem virtuellen Einkaufszentrum zum Durchführung einer Finanztransaktion als Bezahlung für die an die Endgeräteanordnung gelieferten Waren und/oder Dienstleistungen in Verbindung steht. Außerdem betrifft die Erfindung ein Verfahren für den Online-Handel von Waren und/oder Dienstleistungen, bei dem ein Anwender unter Verwenden einer Endgeräteanordnung Waren und/oder Dienstleistungen mittels eines Anforderungssignals über eine erste Rückverbindung von einem virtuellen Einkaufszentrum anfordert, bei dem mittels eines Kartenlesers Abrechnungsdaten von einer Anwenderkarte zur Verrechnung der angeforderten Waren und/oder Dienstleistungen übertragen werden, bei dem eine Verrechnungseinheit eine Finanztransaktion als Bezahlung für die angeforderten Waren und/oder Dienstleistungen durchführt, und bei dem die angeforderten Waren und/oder Dienstleistungen mittels einer breitbandigen Lieferverbindung an den Anwender geliefert werden.

Eine derartige Multimediaplattform sowie ein derartiges Verfahren sind zum Beispiel aus der WO98/56181 für den Bereich des Pay TV sowie des Video on demand bekannt. Bei der bekannten Multimediaplattform wird dem Kunden als Ware oder Dienstleistung ein Film angeboten. Der Kunde kann den gewünschten Film über eine schmalbandige Verbindung, wie beispielsweise GSM Data Service oder SMS anfordern. Als Berechtigungsnachweis für den Zugang sowie auch für die interne Verrechnung der auflaufenden Kosten dient eine Berechtigungskarte. Bei der bekannten Multimediaplattform wird hierzu eine SIM-Karte verwendet. Dem Kunden wird dann der angeforderte Film über eine breitbandige Lieferverbindung, wie beispielsweise über Kabel oder Satellit, bereitgestellt. Es gibt aber auch Multimediaplattformen, bei denen dem Kunden auf einer Wiedergabeeinheit, wie beispielsweise einem Fernsehgerät oder dem Monitor eines Computers, Waren und/oder Dienstleistungen zum Kauf angeboten werden. Dies ist beispielsweise bei dem als E-Commerce bekannten Kauf im Internet der Fall.

Nachteilig bei all diesen bekannten Multimediaplattformen ist aber, daß der Kauf immer auf Kreditbasis durchgeführt werden muß. Zu diesem Zweck kann beispielsweise bei Verwenden eines Mobilfunkgerätes als Rückverbindung via SMS die Telefonrechnung des Kunden mit dem erforderlichen Geldbetrag belastet werden. Der Lieferant kann bei genauer Kenntnis des Kunden diesem auch eine separate Rechnung erstellen. Hier erfolgt die Lieferung wiederum auf Kreditbasis, und der Kunde begleicht die Rechnung erst zu einem späteren Zeitpunkt. Beim Online-Handel übers Internet werden üblicherweise Kreditkartendaten vom Kunden angefordert, damit anschließend die Kreditkarte mit dem erforderlichen Geldbetrag belastet werden kann. All diese Finanztransaktionen auf Kreditbasis bieten für beide Teile ein nicht unerhebliches Risiko. Für den Lieferanten besteht das Risiko, daß er nicht zu seinem Geld kommt, weil der Kunde nicht kreditwürdig ist bzw. nicht bezahlen kann oder will. Die Lieferung der angeforderten Waren und/oder Dienstleistungen erfolgt schließlich immer, noch bevor der Lieferant sicher sein kann, ob er sein Geld erhält. In jedem Fall erhält er seine Bezahlung erst deutlich nach Lieferung der angeforderten Waren und/oder Dienstleistungen. Für den Kunden besteht gerade bei Zahlung mittels Kreditkarte im Internet die Gefahr, daß unberechtigte Dritte Kenntnis von den Kreditkartendaten erlangen und dann die Kreditkarte des Kunden unberechtigt mit Forderungen belasten, oder selber unter Verwenden dieser Kreditkartendaten Käufe tätigen. Ein weiterer Nachteil bei der Durchführung des Online-Handels auf Kreditbasis besteht darin, daß finanzschwache oder nicht kreditwürdige Kunden im allgemeinen keine Möglichkeit haben, am Online-Handel teilzunehmen. Dies schränkt den als Kunden zur Verfügung stehenden Personenkreises für den Online-Handel unerwünscht ein. Es ist auch möglich, daß der Kunde gegen Vorkasse eine Gutschrift erhält. Ein der Gutschrift entsprechender Wert kann dann auf einer sogenannten Smart-Card gespeichert werden. Bei der Lieferung von Waren und/oder Dienstleistungen wird dann der auf der Smart-Card gespeicherte Wert reduziert. Hier ist zwar die Sicherheit für den Lieferanten größer. Jedoch muß der Kunde in Vorkasse treten, was dessen Risiko erhöht und unerwünscht Geldmittel bindet.

Der Erfindung liegt das Problem zugrunde, eine Multimedia Plattform sowie ein Verfahren für den Online-Handel von Waren und/oder Dienstleistungen anzugeben, mit dem sich für Lieferanten und Kunden gleichermaßen risikolos Geschäfte tätigen und Zahlungen durchführen lassen.

Der der Erfindung zugrundeliegende Lösungsgedanke ist es, eine Multimediaplattform sowie ein Verfahren für den Online-Handel anzugeben, mit dem sich Geschäfte nach Art des "Cash and Carry" durchführen lassen.

Die Erfindung löst das Problem dadurch, daß bei einer Multimediaplattform der vorstehend genannten Art die Endgeräteanordnung mittels einer zweiten Rückverbindung mit der Verrechnungseinheit zum Durchführen der Finanztransaktion in Verbindung steht. Bei einem Verfahren der vorstehend genannten Art wird das Problem dadurch gelöst, daß die Abrechnungsdaten von der Endgeräteanordnung über eine zweite Rückverbindung an die Verrechnungseinheit übertragen werden.

In diesem Fall steht der Kunde direkt mit der Verrechnungseinheit in Verbindung. Diese kann beispielsweise der Zahlungsserver einer Bank sein. Nur dieser Bank gegenüber werden die für die Durchführung der Finanztransaktion erforderlichen Daten mitgeteilt. Der Zahlungsserver der Bank steht mit dem Lieferanten und dem Kunden gleichermaßen in Verbindung, so daß ähnlich wie bei der Barzahlung ein direktes Übertragen des Geldbetrages möglich ist. Auch wenn der Kunde nicht kreditwürdig ist und somit keine Kreditkarte erhalten könnte, kann er trotzdem über den ihm aktuell beispielsweise als Guthaben zur Verfügung stehenden Geldbetrag verfügen. Nach Beendigung der Verbindung ist ein Mißbrauch auch dann praktisch ausgeschlossen, wenn Dritte die bei der Verbindung übertragenen Daten unberechtigt abgehört haben sollten. Der Lieferant hat in diesem Fall die Sicherheit, daß er den angeforderten Geldbetrag erhalten hat, noch bevor er die angeforderten Waren und/oder Dienstleistungen an den Kunden liefert.

Die Verbindung der Verrechnungseinheit mit dem virtuellen Einkaufszentrum, die erste und zweite Rückverbindung sollten jeweils eine exklusive Verbindung sein, bei der die beiden Partner jeweils direkt verbunden sind und Daten nur zwischen den jeweiligen Partner ausgetauscht werden. Eine solche exklusive Verbindung ist beispielsweise eine leitungsvermittelte Verbindung bei der Festnetztelefonie oder der Mobilfunktelefonie. Die Exklusivität der Verbindung kann dabei durch eine exklusive Leitung oder einen exklusiven Zeitschlitz sichergestellt sein.

Bei einer Weiterbildung der Erfindung ist die erste Rückverbindung und/oder die zweite Rückverbindung eine schmalbandige Verbindung, vorzugsweise mittels Mobilfunk, insbesondere UMTS, GPRS, GSM oder SMS. Zu diesem Zweck kann die Endgeräteanordnung ein Mobilfunk-Modul aufweisen oder einem Mobilfunkgerät zugeordnet sein. In diesem Fall ist für den Online-Handel lediglich die breitbandige Lieferverbindung zu der Endgeräteanordnung erforderlich. Überall, wo ein Kunde beispielsweise ein Fernsehgerät unter Verwenden eines Kabelanschlusses oder einer Satellitenverbindung betreibt, ist somit ohne weitere Anforderungen mit der Multimediaplattform ebenfalls der Online-Handel möglich.

Es ist außerdem von Vorteil, wenn die Endgeräteanordnung oder das Mobilfunkgerät einen Kartenleser, vorzugsweise einen Geldkartenleser aufweist. Dies ermöglicht eine einfache Online Verbindung zwischen der Endgeräteanordnung des Kunden und der Verrechnungseinheit bei der Bank. Insbesondere wenn ein Geldkartenleser verwendet wird, ist für den Kunden absolut sichergestellt, daß kein Geld durch unberechtigte Dritte von ihm eingezogen werden kann, wenn die Geldkarte nicht in dem Kartenleser steckt. Als Geldkarte bietet sich die Geldkarte der deutschen Kreditwirtschaft wegen ihrer großen Verbreitung an. Es können aber auch andere Geldkarte Verwendung finden, wie beispielsweise in Zukunft eine europäische Geldkarte, die derzeit in der Planung ist. Es kann auch ein weiterer Kartenleser für z. B. eine Smart Card vorgesehen sein. Diese kann beispielsweise personenbezogene Daten des Kunden oder seiner Konsumgewohnheiten enthalten. Diese Smart Card kann beispielsweise auch im Rahmen eines sogenannten Payback Systems verwendet werden.

Ein weiterer Vorteil bei der Multimediaplattform mit den Erfindungsmerkmalen ergibt sich dann, wenn das virtuelle Einkaufszentrum einen Payment Server zum Buchen eines Geldbetrages auf eine Händlergeldkarte hat. In diesem Fall kann direkt in dem virtuellen Einkaufszentrum der Zahlungseingang sichergestellt werden. Vorzugsweise sollte die Händlergeldkarte eine virtuelle Geldkarte sein, weil dann mehrere Zahlungsvorgänge parallel mit einer Händlergeldkarte abgewickelt werden können.

Eine Weiterbildung der Erfindung zeichnet sich dadurch aus, daß das virtuelle Einkaufszentrum mit mindestens einer Liefervorrichtung für die Waren und/oder Dienstleistungen in Lieferverbindung steht. In diesem Fall ist die Multimediaplattform quasi als Marktplatz für viele Anbieter verwendbar. Die Anbieter brauchen lediglich ihr Angebot auf einer Liefervorrichtung, wie beispielsweise einem Internetserver bereitzuhalten und für eine geeignete Lieferverbindung zu sorgen. Auf diese Weise ist eine Vielzahl von Angeboten von ebenfalls einer Vielzahl verschiedener Anbieter auf einer gemeinsamen Multimediaplattform möglich. Bei der Lieferung von Fernsehinhalten oder Videoinhalten sollten vorzugsweise mindestens zwei Programme oder Kanäle gleichzeitig darstellbar sein. Eine weitere Vereinfachung ergibt sich, wenn eine Preisübermittlung von der Liefervorrichtung an das virtuelle Einkaufszentrum unmittelbar vor der Bezahlung der Waren und/oder Dienstleistungen vorgesehen ist. In diesem Fall kann der Anbieter jederzeit Änderungen an seinem Sortiment wie auch an den Preisen vornehmen, ohne daß ständig Preislisten in dem virtuellen Einkaufszentrum aktualisiert werden müssen.

Die Multimediaplattform mit den Erfindungsmerkmalen läßt sich vorteilhaft dadurch ausgestalten, daß die Endgeräteanordnung einen Generator zum Generieren einer für die Lieferung der in Auftrag gegebenen Waren und/oder Dienstleistungen jeweils erforderlichen Schnittstelle entsprechend einer von dem virtuellen Einkaufszentrum übertragenen Beschreibung aufweist. Dies macht den Zugang zu dem virtuellen Einkaufszentrum für potentielle Anbieter besonders vielseitig, da der Kunde in jedem Fall über die für die Lieferung erforderliche Schnittstelle verfügt.

Bei einer anderen Weiterbildung der Erfindung weist die Endgeräteanordnung eine Set-Top-Box auf, die mittels der Lieferverbindung und der ersten Rückverbindung mit dem virtuellen Einkaufszentrum in Verbindung steht und an die ein Fernsehgerät als Wiedergabeeinheit anschließbar ist. Auf diese Weise kann jedermann, der über ein Fernsehgerät verfügt, mittels der Set-Top-Box an dem Online-Handel über die Multimedia Plattform teilnehmen. Es ist zweckmäßig, daß die Set-Top-Box eine PC-basierte Architektur aufweist, weil in diesem Fall ein kostengünstiges, offenes System besteht, an das diverse Peripheriegeräte auf einfache Weise anschließbar sind. Beispielsweise können Kartenleser und Mobilfunk-Modul einfach an die serielle Schnittstelle angeschlossen werden. Zudem ermöglicht die PC-basierte Architektur auf einfache Weise auch die Integration von beispielsweise Internetinhalten. Wenn dann die Set-Top-Box mittels einer Fernbedienung fernbedienbar ist, insbesondere mittels der Fernbedienung des Fernsehgerätes, wird die Teilnahme am Online-Handel auch für solche Personen auf einfache Weise möglich, die sich mit Computern und Internet nicht auskennen.

Bei einer vorteilhaften Ausgestaltung der Multimedia Plattform mit den Erfindungsmerkmalen steht das virtuelle Einkaufszentrum mit der Verrechnungseinheit mittels Mobilfunk, insbesondere UMTS, GPRS, GSM oder SMS, in Verbindung. Auf diese Weise ist der Zugang zu der Verrechnungseinheit vom Kunden und von dem virtuellen Einkaufszentrum auf gleiche Weise möglich, so daß kein unnötig hoher Aufwand für das Bereitstellen von Zugangsmöglichkeiten bei der Verrechnungseinheit erforderlich ist.

Wenn bei einer anderen Weiterbildung der Erfindung die Endgeräteanordnung Dekomprimiermittel zum Dekomprimieren eines komprimierten Eingangssignals aufweist, insbesondere eines MPEG2 Signals, läßt sich die erforderliche Übertragungskapazität bei der breitbandige Lieferverbindung reduzieren.

Eine vorteilhafte Weiterbildung des Verfahrens nach der Erfindung ergibt sich dadurch, daß die Finanztransaktion das Übertragen eines Geldbetrages von einer Geldkarte als Anwenderkarte auf eine Geldkarte eines Waren- und/oder Dienstleistungslieferanten ist. Auf diese Weise ist nur eine direkte Übertragung von einer Geldkarte auf eine andere Geldkarte möglich. Manipulationsmöglichkeiten durch unberechtigte Dritte scheiden folglich vollkommen aus. Der Zahlungsvorgang wird somit ähnlich sicher und transparent wie das Bezahlen mit Bargeld.

Vorzugsweise werden das Anforderungssignal über die erste Rückverbindung und/oder die Abrechnungsdaten über die zweite Rückverbindung mittels einer schmalbandigen Verbindung übertragen. Eine solche schmalbandige Verbindung, wie beispielsweise eine Telefonverbindung, ist praktisch überall verfügbar. Besonders bei Verwenden einer Verbindung via Mobilfunk, insbesondere UMTS, GPRS, GSM-Daten-Service oder SMS sind geeignete Rückverbindungen ohne zusätzlichen Installationsaufwand praktisch überall verfügbar.

Eine Ausführungsform zeichnet sich dadurch aus, daß für die Finanztransaktion in einem ersten Schritt eine Authentifikation der Lieferantenkarte erfolgt, in einem zweiten Schritt der zu übertragende Geldbetrag von dem Anwender bestätigt wird, in einem dritten Schritt der Geldbetrag von der Anwenderkarte abgebucht wird, in einem vierten Schritt die erfolgreiche Finanztransaktion bestätigt wird, und anschließend die Freigabe für die angeforderten Waren und/oder Dienstleistungen erfolgt. Die Authentifikation der Lieferantenkarte sowie die Bestätigung des Geldbetrages durch den Anwender vor dem Abbuchen gibt diesem vollständige Kontrolle über den Zahlvorgang. Hingegen stellt die Freigabe erst nach Bestätigung der erfolgreichen Finanztransaktion sicher, daß der Lieferant seine Bezahlung erhält.

Bei einer Weiterbildung des erfindungsgemäßen Verfahrens werden die Waren und/oder Dienstleistungen als komprimierte Daten geliefert, von der Endgeräteanordnung dekomprimiert und anschließend von einer Wiedergabeeinheit wiedergegeben. Auf diese Weise läßt sich eine hohe Qualität der gelieferten Waren und/oder Dienstleistungen mit einer vergleichsweise geringen zu übertragenen Datenmenge gewährleisten.

Wenn dann die Waren und/oder Dienstleistungen als paketweise komprimierte Daten mittels eines Multiplexers aufeinanderfolgend übertragen und die dem Anwender zugeordneten komprimierten Datenpakete mittels Speichermitteln der Endgeräteanordnung zwischengespeichert werden, können mehrere Waren und/oder Dienstleistungen parallel auf einem Lieferkanal an verschiedene Endabnehmer geliefert werden.

Im folgenden wird ein Ausführungsbeispiel der Erfindung anhand der Zeichnungen näher erläutert. Es zeigen:
Fig. 1 eine schematische Darstellung der Grundanordnung einer Multimediaplattform mit den Erfindungsmerkmalen,
Fig. 2 eine schematische Darstellung der Schaltungsanordnung einer Set-Top-Box der Multimediaplattform von Fig. 1,
Fig. 3 eine schematische Darstellung der einzelnen Komponenten eines virtuellen Einkaufszentrums der Multimediaplattform von Fig. 1,
Fig. 4 ein Blockdiagramm für ein Verfahren mit den Erfindungsmerkmalen, und
Fig. 5 ein Blockdiagramm mit den Verfahrensschritten für das Bezahlen in Fig. 4.

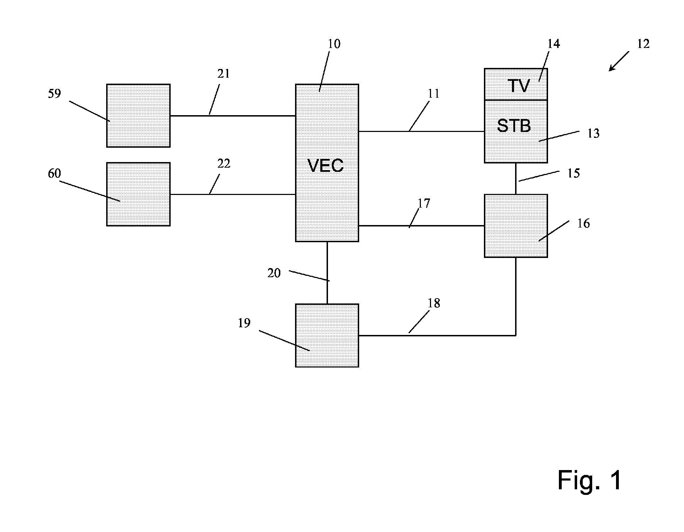

Fig. 1 zeigt eine schematische Darstellung der Grundanordnung einer Multimediaplattform mit den Erfindungsmerkmalen. Ein virtuelles Einkaufszentrum (VEC) 10 ist mittels einer breitbandigen Lieferverbindung 11 mit einer Endgeräteanordnung 12, einer sogenannten Multimedia Home Plattform (MHP), verbunden. Die breitbandige Lieferverbindung 11 kann einer Verbindung via Satellit oder Kabel sein. Zur besseren Übersicht sind die einzelnen Komponenten der breitbandigen Lieferverbindung 11, wie beispielsweise eine Sendestation, nicht dargestellt. Die Endgeräteanordnung 12 weist eine sogenannte Set-Top-Box 13 und ein daran angeschlossenes Fernsehgerät 14 auf, die bei einem Endabnehmer angeordnet sind. Nicht in der Fig. 1 dargestellt sind Eingabemittel, wie beispielsweise eine Tastatur oder eine Fernbedienung, zum Bedienen der Set-Top-Box 13 und des Fernsehgerätes 14.

Die Set-Top-Box 13 ist mittels einer schmalbandigen Verbindung 15 mit einer Vermittlungsstelle 16 verbunden. Bei dem dargestellten Ausführungsbeispiele ist die schmalbandige Verbindung 15 eine Mobilfunkverbindung mittels SMS. Es kann aber auch eine normale Telefonverbindung oder eine Verbindung mittels UMTS, GPRS oder GMS-Datenservice verwendet werden. Die Vermittlungsstelle 16 ist stellvertretend für eine oder mehrere Vermittlungsstellen des öffentlichen Telekommunikations- oder Mobilfunknetzes dargestellt, die gerade verwendet werden. Die Vermittlungsstelle 16 ist mittels einer ersten Rückverbindung 17 mit dem virtuellen Einkaufszentrum 10 und mittels einer zweiten Rückverbindung 18 mit einer Verrechnungseinheit 19 verbunden. Die Rückverbindungen 17,18 sind schmalbandig ähnlich der Verbindung 15. Im einzelnen werden in der Fig. 1 für die Rückverbindungen 17,18 ebenfalls SMS verwendet. Die Verbindungen 15,17,18 sind bidirektional ausgebildet. Wesentlich bei dem gezeigten Ausführungsbeispiel ist, daß die Verbindung 15 zusammen mit den Rückverbindungen 17, 18 jeweils direkt und exklusiv mit dem virtuellen Einkaufszentrum 10 bzw. der Verrechnungseinheit 19 verbunden ist. Dies ist bei der dargestellten leitungsvermittelten Verbindung der Fall. Es ist aber unwesentlich, ob die Exklusivität der jeweiligen Verbindung durch eine exklusive Leitung oder durch einen exklusiven Zeitschlitz sichergestellt ist.

Die Verrechnungseinheit 19 ist ein Zahlungsserver eines Kreditinstitutes. Sie ist mittels einer weiteren Verbindung 20 mit dem virtuellen Einkaufszentrum 10 verbunden. Die weitere Verbindung 20 ist für den Betrieb der Multimediaplattform mit den Erfindungsmerkmalen allerdings nicht notwendig. Die Kommunikation zwischen der Verrechnungseinheit 19 und dem virtuellen Einkaufszentrum 10 kann auch über die Verbindungen 17,18 und die Vermittlungsstelle 16 erfolgen. Die weitere Verbindung 20 ist ähnlich den Verbindungen 15, 17, 18 ausgebildet.

Das virtuelle Einkaufszentrum ist außerdem über Lieferverbindungen 21,22 mit Lieferanten 59,60 verbunden. In der Figur sind zwei Lieferanten 59,60 stellvertretend dargestellt. Das virtuelle Einkaufszentrum 10 kann mit einer beliebigen Anzahl Lieferanten verbunden sein.

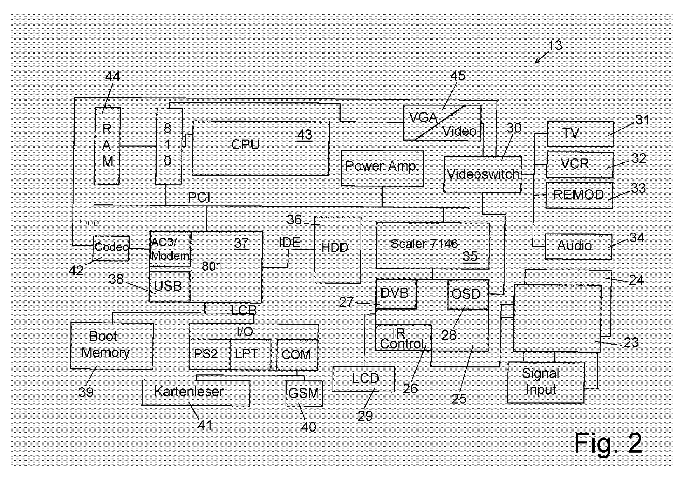

Fig. 2 zeigt eine schematische Darstellung der Schaltungsanordnung der Set-Top-Box 13. Die Set-Top-Box 13 hat zwei Empfangsteile 23,24 zum Empfangen der über die breitbandige Lieferverbindung 11 übertragenen Signale. Das Empfangsteil 23 ist für das Empfangen von Eingangssignalen via Satellit ausgelegt. Im Gegensatz dazu dient das Empfangsteil 24 zum Empfangen eines Eingangssignals über einen Kabelanschluß. Bei dem gezeigten Ausführungsbeispiel sind beide Empfangsteile 23,24 vorhanden, damit mit ein und derselben Set-Top-Box 13 wahlweise eine Lieferverbindung über Kabel oder Satellit genutzt werden kann. Es ist aber auch eine Ausgestaltung möglich, die nur eine Empfangsteil 23,24 hat. In diesem Fall ist für Satellitenempfang beziehungsweise Betrieb mit einem Kabelanschluß jeweils eine unterschiedliche Set-Top-Box 13 erforderlich.

Die Empfangsteile 23,24 sind mit einer Steuerschaltung 25 verbunden, die ein IR Modul 26 für eine Infrarotfernbedienung, ein DVB-Modul 27 für die Bearbeitung von digitalen Videosignale und ein OSD-Modul 28 für die On-Screen-Darstellung beispielsweise eines Menüs direkt auf einer Videolage aufweist. Die Steuerschaltung 25 ist mit einer LCD-Anzeige 29 verbunden, auf der einem Anwender Statusinformationen der Set-Top-Box angezeigt werden. Über einen Schalter 30 (Videoswitch) ist das OSD-Modul 28 mit Ausgängen der Set-Top-Box 13 verbunden. In der Figur dargestellt ist ein TV-Scartausgang 31 zum Anschließen des Fernsehgerätes 14, ein VCR-Scartsausgang 32 zum Anschließen eines nicht in der Figur dargestellten Videorecorders, ein Remodulationsausgang 33 und ein Audioausgang 34. Die Steuerschaltung 25 ist außerdem über eine Skalierschaltung mit einem PCI-Bus verbunden.

Die Set-Top-Box 13 weist außerdem eine Festplatte 36, die über eine weitere Steuerschaltung 37 ebenfalls mit dem PCI-Bus verbunden ist. Die Steuerschaltung 37 weist eine USB-Schnittstelle 38 auf und ist mit einem Initialisierungsspeicher 39, einer Schnittstelle PS2, einer parallelen Schnittstelle LPT und einer seriellen Schnittstelle COM verbunden. An die serielle Schnittstelle COM sind ein GSM Modul 40 und ein Kartenleser 41 angeschlossen. Die weitere Steuerschaltung 37 ist außerdem über ein Dekodiermodul 42 mit dem Schalter 30 verbunden. Das Dekodiermodul 42 dient zum Dekodieren beziehungsweise Dekomprimieren eines beispielsweise MPEG2-kodierten Eingangssignals.

Die Set-Top-Box 13 weist außerdem einen Prozessor 43 einen Schreib-/Lesespeicher 44 und einen Wandler 45 zum Umwandeln eines VGA Signals in ein Videosignal auf, der ebenfalls mit dem Schalter 30 verbunden ist.

Über die breitbandige Lieferverbindung 11 können beispielsweise komprimierte digitale Videosignale von den Empfangsteilen 23,24 empfangen und anschließend auf der Festplatte 36 zwischengespeichert werden. Auf diese Weise kann beispielsweise bei einer Übertragungsdauer von etwa fünf Minuten eine Filmsequenz mit einer Spieldauer von mehr als 15 Minuten auf der Festplatte 36 zwischengespeichert werden. Während diese Filmsequenz dann dekomprimiert und auf dem Fernsehgerät 14 dargestellt wird, können auf der breitbandigen Lieferverbindung 11 beispielsweise via Satellit anderen Kunden mit anderen Inhalten bedient werden. Auf diese Weise kann beispielsweise mit einem geringen Aufwand an bereitzustellender Übertragungszeit des benutzen Satelliten einer großen Anzahl Benutzern ein Film zu einer durch den jeweiligen Benutzer quasi beliebig zu bestimmenden Startzeit bereitgestellt werden. Gleichzeitig ist auf dem Fernsehgerät 14 mittels des OSD-Moduls 28 ein Menü darstellbar aus dem der Benutzer auswählen kann. Außerdem können über den Wandler 45 JAVA, HTML und andere internetorientierte Inhalte auf dem Fernsehgerät 14 dargestellt werden.

Nicht in der Figur dargestellt sind außerdem ein für ein Aufladen einer Geldkarte erforderliches Marktplatzsicherheitsmodul sowie Mittel für die Fernwartung. Beispielsweise wird nach erfolgreichen Durchlauf eines Selbsttests die Meldungen und "Status OK" von der Set-Top-Box 13 an das virtuelle Einkaufszentrum 10 übertragen. Im laufenden Betrieb erfolgt eine Rückmeldung "Zustand Online" von der Set-Top-Box 13 an das virtuelle Einkaufszentrum 10.

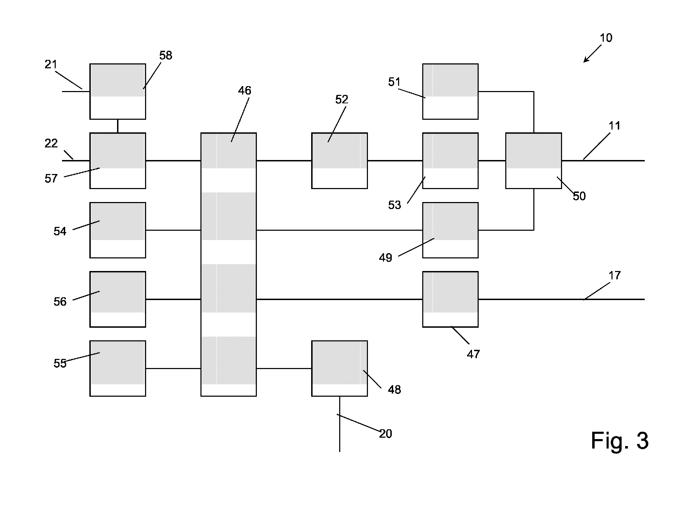

Fig. 3 zeigt eine schematische Darstellung der einzelnen Komponenten des virtuellen Einkaufszentrums 10. Ein Managementsystem 46 zur Steuerung des Betriebs des virtuellen Einkaufszentrums 10 ist über ein SMS-Gateway 47 mit der ersten Rückverbindung 17 verbunden. Außerdem ist das Managementsystem 46 über einen Paymentserver 48 mit der weiteren Verbindung 20 verbunden. Das Managementsystem 46 ist weiterhin über eine Dateneinleitanordnung 49 mit einem Multiplexer 50 verbunden, dessen Ausgang mit der breitbandigen Lieferverbindung 11 in Lieferverbindung steht. Ein Eingang des Multiplexers 50 ist außerdem mit einer Speiseanordnung 51 für TV-Inhalte verbunden. Das Managementsystem 46 steht zudem über einen Wechselwirkungsserver 52 und eine Rundfunkeinrichtung 53 mit einem dritten Eingang des Multiplexers 50 in Verbindung. Beispielsweise ist über den Wechselwirkungsserver 52 ein interaktives Fernsehprogramm oder der Betrieb von interaktiven Spielen möglich.

Das Managementsystem 46 ist außerdem mit einer Steuereinheit 54 für die Verwaltung und die Steuerung des bereitgestellten Inhalts verbunden. Weiter ist das Managementsystem 46 mit einer ersten Datenbasis 55 für den Logging Service und einer zweiten Datenbasis 56 verbunden, die zur Verwaltung der Kundendaten dient. Eine weitere Verbindung besteht zwischen dem Managementsystem 46 und einer Zugangseinheit 57, die über die Lieferverbindung 22 mit einem oder mehreren Lieferanten 60 verbunden ist. Außerdem ist die Zugangseinheit 57 über ein Netzwerk 58 und die Lieferverbindung 21 ebenfalls mit einem oder mehreren Lieferanten 59 verbunden. Als Netzwerk 58 dient beispielsweise das Internet.

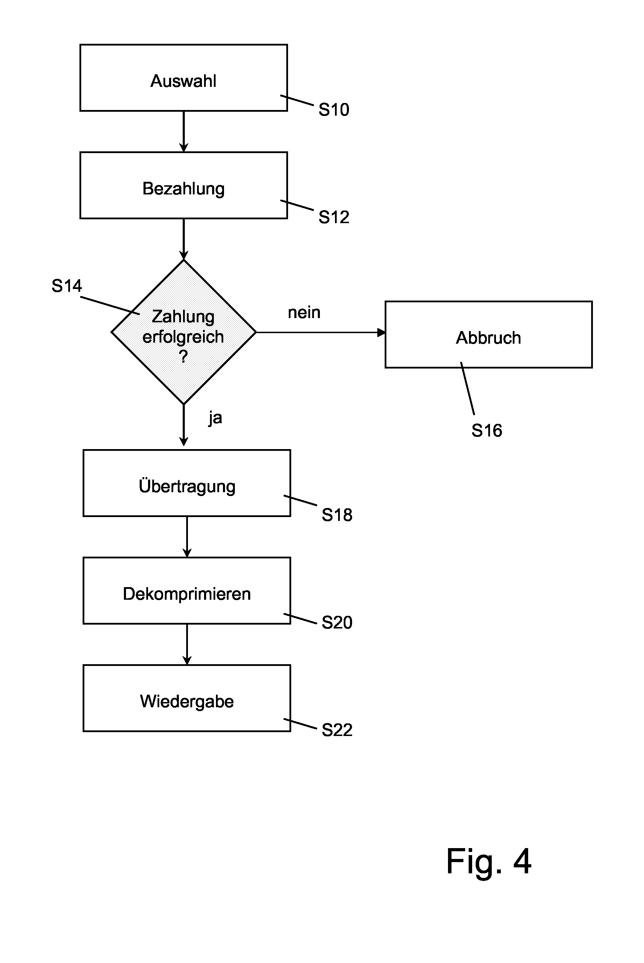

Im folgenden wird die Arbeitsweise der in den Figuren 1 bis 3 beschriebenen Multimediaplattform näher beschrieben. Fig. 4 zeigt ein Blockdiagramm mit den Verfahrensschritten für die Bereitstellung eines Videofilmes oder die Lieferung eines Softwareprogramms als Beispiel für die Lieferung von Waren und/oder Dienstleistungen.

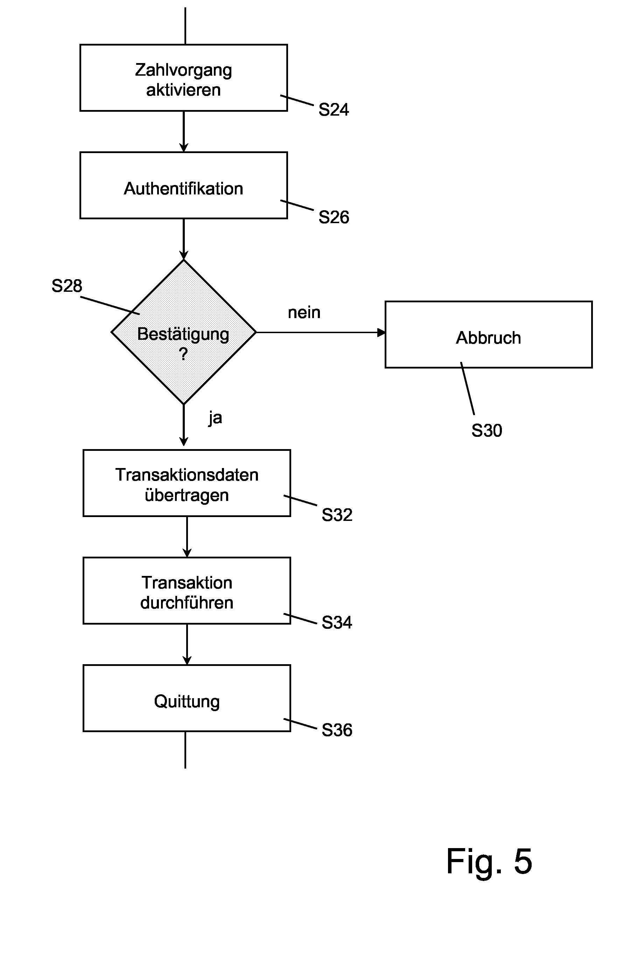

In Schritt S10 erfolgt die Auswahl beispielsweise eines Spielfilms durch einen Benutzer. Zu diesem Zweck kann beispielsweise ein Angebot in Papierform vorliegen. Es kann aber auch ein elektronischer Programmführer oder eine Angebotsauswahl von dem virtuellen Einkaufszentrum 10 über die breitbandige Lieferverbindung 11 an die Set-Top-Box 13 übertragen und auf dem Fernsehgerät 14 dargestellt werden. Der Benutzer kann dann die Auswahl durch Eingabe einer Codenummer beispielsweise direkt in sein Mobilfunkgerät, mittels einer Tastatur für die Set-Top-Box 13 oder auch direkt mit der Fernbedienung aus einem auf dem Fernsehgerät 14 dargestellten Menü treffen. Die Auswahl des Benutzers wird dann von der Set-Top-Box 13 oder einem nicht in den Figuren dargestellten Mobilfunktelefon über die schmalbandige Verbindung 15, die Vermittlungsstelle 16 und die erste Rückverbindung 17 an das virtuelle Einkaufszentrum 10 übermittelt. Von dem Managementsystem 46 wird daraufhin mit Hilfe der Steuereinheit 54 der zuständige Lieferant 59, 60 ermittelt und über die Zugangseinheit 57 und die Lieferverbindung 22 beziehungsweise die Lieferverbindung 21 und das Netzwerk 58 der aktuelle Preis für das Angebot von dem zuständigen Lieferanten 59, 60 eingeholt. Dieser aktuelle Preis kann dann über die breitbandige Lieferverbindung 11 oder über die erste Rückverbindung 17 dem Kunden rückübermittelt werden. Ist der Kunde mit dem aktuellen Preis einverstanden, erfolgt anschließend im Schritt S12 die Bezahlung, auf die nachfolgend anhand der Fig. 5 noch näher eingegangen wird.

In Schritt S14 wird überprüft, ob die in Schritt S12 erfolgte Zahlung erfolgreich abgeschlossen worden ist. Ist das nicht der Fall, wird in Schritt S16 der Ablauf abgebrochen. Wird in Schritt S14 eine erfolgreich durchgeführt Bezahlung festgestellt, erfolgt als nächstes der Schritt S18.

In Schritt S18 wird die Übertragung der ausgewählten Waren und/oder Dienstleistungen über die breitbandige Lieferverbindung 11 durchgeführt. Zu diesem Zweck werden von dem Managementsystem 46 mit Hilfe der Steuereinheit 54 die erforderliche Schnittstelle und nähere Informationen über die bereitzustellende Leistung bestimmt. Die erforderlichen Inhalte werden von den Lieferanten 59 beziehungsweise 60 über die Lieferverbindung 21 beziehungsweise 22 und die Zugangseinheit 57 an das Managementsystem 46 bereitgestellt. Das Managementsystem 46 liefert dann die erforderlichen Daten für das Generieren einer Schnittstelle über die Dateneinleitanordnung 49 und den Multiplexer 50 an die Set-Top-Box 13, wo der Prozessor 43 anschließend die erforderliche Schnittstelle generiert. Danach wird der ausgewählte Inhalte über den Wechselwirkungsserver 52 die Rundfunkeinrichtung 53 und den multiplexer 50 an eines der Empfangsteile 23,24 der Set-Top-Box 13 übertragen.

In Schritt S20 erfolgt die Dekomprimierung der komprimiert übertragenen Videodaten mittels des Dekomprimiermodules 42, und in Schritt S22 erfolgt die Wiedergabe des ausgewählten Filmes auf dem Fernsehgerät 14.

Fig. 5 zeigt ein Blockdiagramm der einzelnen Schritte für das Bezahlen in Schritt S12 von Fig. 4. Nachdem der Kunde in Schritt S10 seine Auswahl mit dem aktuellen Preis bestätigt, hat wird als nächstes in Schritt S24 der Zahlvorgang aktiviert. Zu diesem Zweck sendet das GSM Modul 40 über die schmalbandige Verbindung 15 die Vermittlungsstelle 16 und die zweite Rückverbindung 18 eine erste SMS an die Verrechnungseinheit 19.

In Schritt S26 holt die Verrechnungseinheit als nächstes die Authentifikation der Geldkarte des jeweiligen Lieferanten (Händlerkarte) ein, auf die der Geldbetrag als Bezahlung gutgeschrieben werden soll. Als Händlerkarten sind sogenannte virtuelle Händlerkarte auf dem Paymentserver 48 eingerichtet. Diese haben gegenüber tatsächlichen Geldkarten als Händlerkarte den Vorteil, daß mehrere Zahlungsvorgänge gleichzeitig mit der gleichen Händlerkarte abgewickelt werden können.

In Schritt S28 werden die in Schritt S26 eingeholten Authentifikationsdaten der Händlerkarte zusammen mit dem als Bezahlung erforderlichen Betrag von der Verrechnungseinheit 19 über die zweite Rückverbindung 18 an das GSM Modul 40 der Set-Top-Box 13 zurückübertragen. Beim Kunden werden der auf der Geldkarte in dem Kartenleser 41 vorhandene Geldbetrag und der für die Zahlung erforderliche Betrag auf dem Fernsehgerät 14 dargestellt, und der Kunde wird zur Bestätigung des Zahlvorganges aufgefordert. Reicht der auf der Geldkarte vorhandene Geldbetrag nicht zur Zahlung aus, erfolgt als nächstes in Schritt S30 der Abbruch. Wenn der Kunde in Schritt S28 den Zahlauftrag nicht bestätigt, erfolgt ebenfalls als nächstes der Abbruch in Schritt S30.

Wenn der Kunde in Schritt S28 den Zahlvorgang mittels seiner Fernbedienung oder der Tastatur bestätigt, wird als nächstes in Schritt S32 der erforderliche Geldbetrag von der Geldkarte des Kunden (Kundenkarte) in dem Kartenleser 41 abgebucht. Die hierdurch generierten Transaktionsdaten werden anschließend komprimiert und von dem GSM Modul 40 über die zweite Rückverbindung 18 an die Verrechnungseinheit 19 übertragen.

Die Verrechnungseinheit führt in Schritt S34 die erforderlichen Transaktionen durch, um den von der Kundenkarte abgebuchten Geldbetrag auf der virtuellen Händlerkarte gutzuschreiben. Nach der Gutschrift auf der Händlerkarte erfolgt in Schritt S36 die Benachrichtigung des virtuellen Einkaufszentrumszentrums über die erfolgreich ausgeführte Finanztransaktion. Anschließend geht es weiter in Schritt S18 in Fig. 4.

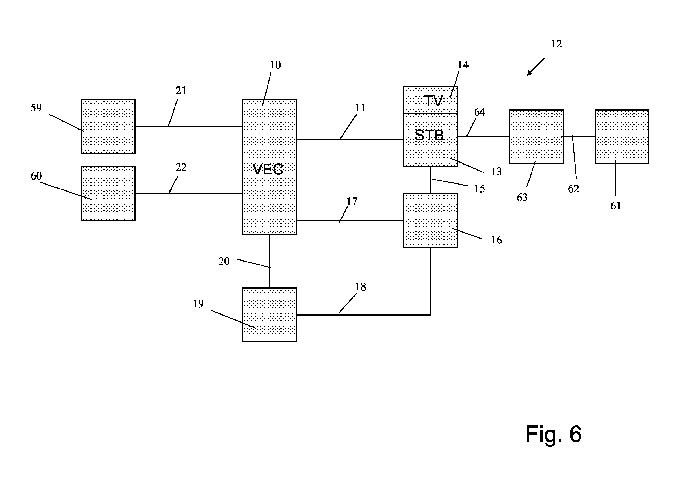

Fig. 6 zeigt eine schematische Darstellung der Grundanordnung einer Multimediaplattform mit den Erfindungsmerkmalen ähnlich Fig. 1. Gleiche Elemente tragen die gleichen Bezugsziffern. Zusätzlich weist die in Fig. 6 gezeigte Multimediaplattform Erfassungsmittel 61 für die Erfassung von beispielsweise Betriebskosten auf. Das Erfassungsmittel 61 kann beispielsweise ein Zähler für Strom, Gas, Wasser oder die Benutzung einer anderen Ressource sein. Vorzugsweise weist das Erfassungsmittel 61 einen digitalen Zähler und eine Ausleseeinheit auf. Das Erfassungsmittel 61 ist mittels einer Verbindung 62 mit einem Übertragungsmittel 63 verbunden. Die Verbindung 62 kann eine Leitung 62 oder auch eine andere geeignete Verbindung sein, wie beispielsweise eine Funkstrecke oder eine Infrarotübertragung. Das Übertragungsmittel 63 ist mittels einer Verbindung 64 mit der Set-Top-Box 13 verbunden. Die Verbindung 64 kann ebenfalls eine konventionelle Leitung 64, eine Funkstrecke oder eine Infrarotübertragungsstrecke sein.

Mittels des digitalen Zählers des Erfassungsmittels 61 wird bei dem gezeigten Ausführungsbeispiel der Verbrauch an Wärmeenergie an einem Heizkörper erfaßt. Der Zählerstand wird sodann über die Verbindung 62 an das Übertragungsmittel 63 übertragen. Das Übertragungsmittel 63 kommuniziert auf diese Weise mit mehreren, nicht in der Figur einzeln dargestellten Erfassungsmitteln 61. Das Übertragungsmittel 63 ist vorzugsweise an einem zentralen Punkt angeordnet und überträgt die von den Erfassungsmitteln 61 erfaßten Daten über die Funkverbindung 64 an die Set-Top-Box 13. Dort werden die gesammelten Daten beispielsweise in ein GPRS-Signal umgesetzt und an das virtuelle Einkaufszentrum 10 weitergeleitet. Anschließend erfolgt die direkte Bezahlung der gelieferten Wärmemenge.

Das Übertragungsmittel 63 und die Verbindung 64 sind nicht unbedingt erforderlich. Es ist auch möglich, daß das Erfassungsmittel 61 direkt mit der Set-Top-Box 13 kommuniziert.

Bei der Multimediaplattform mit den Erfindungsmerkmalen wird also ein Online-Handel nach Art des "Cash an Carry" ermöglicht, indem ein Geldbetrag aus einer elektronischen Geldbörse, nämlich einer Kundengeldkarte, auf eine andere elektronische Geldbörse übertragen wird, nämlich auf die virtuelle Händlergeldkarte. Dies kommt der direkten Zahlung durch Bargeld gleich. Zu diesem Übertragen des Geldbetrages müßten Händler und Kunde sich eigentlich direkt gegenüberstehen. Beim Online-Handel sind Händler und Kunde aber weit voneinander entfernt. Ein Übertragen des Geldbetrages, ohne daß sich Händler und Kunde direkt gegenüberstehen, wird dadurch ermöglicht, daß die Endgeräteanordnung 12 des Kunden mittels einer zweiten Rückverbindung 18 mit der Verrechnungseinheit 19 in Verbindung steht. Mit der erfindungsgemäßen Multimediaplattform ist es außerdem möglich, daß der Kunde direkt von zuhause aus seiner Geldkarte auflädt.

Es ist außerdem von Vorteil, wenn die Multimediaplattform mit den Erfindungsmerkmalen eine Navigationshilfe für einen Benutzer aufweist. Diese Navigationshilfe hat einen Indikator für einen auf dem Bildschirm des Fernsehgerätes 14 wiedergegebenen Bereich. Die Navigation erfolgt dann mittels Betätigen der Cursortasten der Fernbedienung. Zweckmäßigerweise sind außerdem Mittel für die Fernwartung vorgesehen. Nach einem Selbsttest der Set-Top-Box 13 wird ein ordnungsgemäßer Betrieb mit einer Meldung "Status OK" an das virtuelle Einkaufszentrum 10 übertragen. Bei einem Fehlen einer solchen Rückmeldung eines ordnungsgemäßen Betriebs oder bei einer Irrmeldung, die eine Fehlfunktion angibt, können dann von dem virtuellen Einkaufszentrum 10 aus die erforderlichen Schritte eingeleitet werden. Außerdem kann die Set-Top-Box 13 eine Rückmeldung "Zustand Online" an das virtuelle Einkaufszentrum 10 weitergeben. Es ist außerdem sinnvoll, wenn die Set-Top-Box 13 eine Implementierung für ein sogenanntes Voice over IP aufweist. Damit können Telefongespräche kostengünstig über das Internet geführt werden. Die Bedienung der Set-Top-Box 13 läßt sich außerdem durch eine Sprachsteuerung erleichtern.

### Bezugszeichenliste:

- 10: virtuelles Einkaufszentrum
- 11: breitbandige Lieferverbindung
- 12: Endgeräteanordnung
- 13: Set-Top-Box
- 14: Fernsehgerät
- 15: schmalbandige Verbindung
- 16: Vermittlungsstelle
- 17: erste Rückverbindung
- 18: zweite Rückverbindung
- 19: Verrechnungseinheit
- 20: weitere Verbindung
- 21: Lieferverbindung
- 22: Lieferverbindung
- 23: Empfangsteil
- 24: Empfangsteil
- 25: Steuer Schaltung
- 26: IR-Modul
- 27: DVB-Modul
- 28: OSD-Modul
- 29: LCD-Anzeigen
- 30: Schalter
- 31: TV-Scartausgang
- 32: VCR-Sartausgang
- 33: Remodulationsausgang
- 34: Audioausgang
- 35: Skalierschaltung
- 36: Festplatte
- 37: weitere Steuerschaltung

- 38: USB Schnittstelle
- 39: Initialisierungspeicher
- 40: GSM-Modul
- 41: Kartenleser
- 42: Deodiermodul
- 43: Prozessor
- 44: Schreib-/Lesespeicher
- 45: Wandler
- 46: Managementsystem
- 47: SMS Gateway
- 48: Paymentserver
- 49: Dateneinleitanordnung
- 50: Multiplexer
- 51: Speiseanordnung
- 52: Wechselwirkungsserver
- 53: Rundfunkeinrichtung
- 54: Steuereinheit
- 55: erste Datenbasis
- 56: zweite Datenbasis
- 57: Zugangseinheit
- 58: Netzwerk
- 59: Lieferant
- 60: Lieferant
- 61: Erfassungsmittel
- 62: Verbindung
- 63: Übertragungsmittel
- 64: Verbindung

## Patentansprüche

1. Multimediaplattform für den Online-Handel von Waren und/oder Dienstleistungen, mit einem virtuellen Einkaufszentrum (10), von dem Waren und/oder Dienstleistungen abrufbar sind, mit einer Endgeräteanordnung (12), die eine Wiedergabeeinheit (14) und Eingabemittel aufweist,
mit einer breitbandigen Lieferverbindung (11) zwischen dem virtuellen Einkaufszentrum (10) und der Endgeräteanordnung (12), und mit einer ersten Rückverbindung (17) von der Endgeräteanordnung (12) zu dem virtuellen Einkaufszentrum (10) zum Erteilen eines Auftrags,
wobei eine Verrechnungseinheit (19) mit dem virtuellen Einkaufszentrum (10) zum Durchführen einer Finanztransaktion als Bezahlung für die an die Endgeräteanordnung (12) gelieferten Waren und/oder Dienstleistungen in Verbindung steht,
**dadurch gekennzeichnet,daß** die Endgeräteanordnung (12) mittels einer zweiten Rückverbindung (18) mit der Verrechnungseinheit (19) zum Durchführen der Finanztransaktion in Verbindung steht.

2. Multimediaplattform nach Anspruch 1, **dadurch gekennzeichnet, daß** die Endgeräteanordnung (12) ein Mobilfunk-Modul (40) aufweist oder einem Mobilfunkgerät zugeordnet ist, und/oder daß die Endgeräteanordnung (12) oder das Mobilfunkgerät einen Kartenleser (41), vorzugsweise einen Geldkartenleser, aufweist, und/oder, daß die Endgeräteanordnung (12) einen Generator (43) zum Generieren einer für die Lieferung der in Auftrag gegebenen Waren und/oder Dienstleistungen jeweils erforderlichen Schnittstelle entsprechend einer von dem virtuellen Einkaufszentrum (10) übertragenen Beschreibung aufweist.

3. Multimediaplattform nach Anspruch 1 oder 2, **dadurch gekennzeichnet, daß** das virtuelle Einkaufszentrum (10) einen Paymentserver (48) zum Buchen eines Geldbetrages auf eine, vorzugsweise virtuelle, Händlergeldkarte hat, und/oder daß das virtuelle Einkaufszentrum (10) mit mindestens einer Liefervorrichtung (59, 60) für die Waren und/oder Dienstleistungen in Lieferverbindung steht.

4. Multimediaplattform nach einem der vorhergehenden Ansprüche, **dadurch gekennzeichnet, daß** die Endgeräteanordnung (12) eine, vorzugsweise PC-basierte, Set-Top-Box (13) aufweist, die mittels der Lieferverbindung (11) und der ersten Rückverbindung (17) mit dem virtuellen Einkaufszentrum (10) in Verbindung steht und an die ein Fernsehgerät (14) als Wiedergabeeinheit anschließbar ist, und daß vorzugsweise die Set-Top-Box (13) mittels einer Fernbedienung, insbesondere des Fernsehgerätes, fernbedienbar ist, und/oder, daß die Endgeräteanordnung (12) Dekomprimiermittel (42) zum Dekomprimieren eines komprimierten Eingangssignals, insbesondere eines MPEG2 Signals, aufweist.

5. Multimediaplattform nach einem der vorhergehenden Ansprüche, **dadurch gekennzeichnet, daß** das virtuelle Einkaufszentrum (10) mit der Verrechnungseinheit (19) mittels einer schmalbandigen Verbindung (17, 18, 20), vorzugsweise Mobilfunk, insbesondere UMTS, GPRS, GSM oder SMS, in Verbindung steht.

6. Multimediaplattform nach einem der vorhergehenden Ansprüche, **dadurch gekennzeichnet, daß** die Endgeräteanordnung (12) mit Erfassungsmitteln (61) für die Betriebskostenerfassung oder Verbrauchskostenerfassung in Verbindung steht.

7. Verfahren für den Online-Handel von Waren und/oder Dienstleistungen, bei dem ein Anwender unter Verwenden einer Endgeräteanordnung (12) Waren und/oder Dienstleistungen mittels eines Anforderungssignals über eine erste Rückverbindung (17) von einem virtuellen Einkaufszentrum (10) anfordert, bei dem mittels eines Kartenlesers (41) Abrechnungsdaten von einer Anwenderkarte zur Verrechnung der angeforderten Waren und/oder Dienstleistungen übertragen werden, bei dem eine Verrechnungseinheit (19) eine Finanztransaktion als Bezahlung für die angeforderten Waren und/oder Dienstleistungen durchführt, und bei dem die angeforderten Waren und/oder Dienstleistungen mittels einer breitbandigen Lieferverbindung (11) an den Anwender geliefert werden, **dadurch gekennzeichnet,daß** die Abrechnungsdaten von der Endgeräteanordnung (12) über eine zweite Rückverbindung (18) an die Verrechnungseinheit (19) übertragen werden.

8. Verfahren nach Anspruch 7, **dadurch gekennzeichnet, daß** die Finanztransaktion das Übertragen eines Geldbetrages von einer Geldkarte als Anwenderkarte auf eine, vorzugsweise virtuelle, Geldkarte eines Waren- und/oder Dienstleistungslieferanten ist, und/oder, daß das Anforderungssignal über die erste Rückverbindung (17) und/oder die Abrechnungsdaten über die zweite Rückverbindung (18) mittels einer schmalbandigen Verbindung, vorzugsweise Mobilfunk, insbesondere UMTS, GPRS, GSM oder SMS, übertragen werden.

9. Verfahren nach Anspruch 8, **dadurch gekennzeichnet, daß** für die Finanztransaktion in einem ersten Schritt (S26) eine Authentifikation der Lieferantenkarte erfolgt, in einem zweiten Schritt (S28) der zu übertragende Geldbetrag von dem Anwender bestätigt wird,
in einem dritten Schritt (S32) der Geldbetrag von der Anwenderkarte abgebucht wird, in einem vierten Schritt (S36) die erfolgreiche Finanztransaktion bestätigt wird, und anschließend die Freigabe für die angeforderten Waren und/oder Dienstleistungen erfolgt.

10. Verfahren nach einem der Ansprüche 7 bis 9, **dadurch gekennzeichnet, daß** die Waren und/oder Dienstleistungen als komprimierte Daten geliefert werden, daß die komprimierten Daten von der Endgeräteanordnung (12), vorzugsweise einer Set-Top-Box (13), dekomprimiert und anschließend von einer Wiedergabeeinheit, vorzugsweise einem Fernsehgerät (14), wiedergegeben werden, und daß insbesondere die Waren und/oder Dienstleistungen als paketweise komprimierte Daten mittels eines Multiplexers (50) aufeinanderfolgend übertragen werden, und daß die dem Anwender zugeordneten komprimierten Datenpakete mittels Speichermitteln (36) der Endgeräteanordnung (12) zwischengespeichert werden.
